# EUROPEAN PATENT APPLICATION

(11) **EP 2 226 625 A1**
(43) Date of publication of application: **08.09.2010**
(21) Application number: 08857786.1
(22) Date of filing: 02.12.2008
(51) Int. Cl.: G01N 21/956, G06T 1/00, H01L 21/66

(54) **MONITORING APPARATUS AND MONITORING METHOD**

(30) Priority: 05.12.2007 JP 2007314440
(71) Applicant: Nikon Corporation, Tokyo 100-8331 (JP)
(72) Inventor: OKAMOTO, Hiroaki, Tokyo 100-8331 (JP)
(74) Representative: Petzold, Silke
(86) International application number: PCT/JP2008/071850
(87) International publication number: WO 2009/072483

(57) **Abstract**

A monitoring apparatus is provided with an imaging section which can partially pick up an image of a wafer (10). The monitoring apparatus monitors the surface of the wafer (10) by using partial images (A, A and so on) of the wafer (10) in a plurality of imaging regions. The partial images are obtained by picking up the images of a plurality of parts of the wafer (10) (an apex section (13)), while relatively moving the imaging region of the imaging section in the circumference direction of the wafer (10). The monitoring apparatus is provided with an image connecting section and an image display section. The image connecting section compresses partial images (A, A and so on) so that each compression ratio in a direction corresponding to the circumference direction of the wafer (10) is larger than that in the direction vertical to such direction, then, the image connecting section connects the partial images to be arranged in the circumference direction to obtain a connected image (B) by which the apex section (13) of the wafer (10) can be continuously visible in the circumference direction. The image display section displays the connected image (B) wherein the partial images are connected by the image connecting section.

## Description

### TECHNICAL FIELD

The present invention relates to a monitoring apparatus and a monitoring method for monitoring such monitoring target objects as a semiconductor wafer and a liquid crystal glass substrate.

### TECHNICAL BACKGROUND

In recent years as the degree of integration of circuit element patterns, formed on semiconductor wafers, increases, the types of thin film used for surface treating of a wafer in semiconductor manufacturing steps are increasing. Along with this, defect inspection in an area near the edge of a wafer, where the boundary portion of thin film is exposed, is becoming critical. If a defect, such as an adhering foreign substance, exists in an area near the edge of the wafer, the foreign substance would wrap around the front surface and have a negative influence, effecting the yield of the circuit elements diced from the wafer.

To prevent this, inspection devices for inspecting defects, including foreign substances, peeling of film, bubbles in film, and the wrap around of film, by monitoring an area near the end face (e.g. apex, top and bottom bevels) of a disk shaped monitoring target object, such as a semiconductor wafer, in a plurality of directions, have been proposed (e.g. see Patent Document 1). These inspection devices have, for example, a configuration to detect such a defect as a foreign substance using the scattered light generated by irradiating laser beams, or a configuration to detect such a defect as a foreign substance by generating an image of the monitoring target object in a strip using a line sensor.
Patent Document 1: Japanese Laid-Open Patent Publication No. 2004-325389

### DISCLOSURE OF THE INVENTION

### PROBLEMS TO BE SOLVED BY THE INVENTION

Another available configuration is obtaining partial images of an area around the end face of the monitoring target object one-by-one using an image acquisition apparatus, and detecting such a defect as a foreign substance based on the plurality of image data, but if an image acquisition apparatus having a high resolution that allows recognizing a small defect is used, it excels in monitoring the individual shape of a small defect, but can monitor only in a small monitoring range, and this makes it difficult to know a defect position in the entire monitoring target object, to know the shape of the defect in a wide range, and to know the macro-tendencies of defect distribution.

With the foregoing in view, it is an object of the present invention to provide a monitoring apparatus and a monitoring method that allow easy recognition of defects in a wide range.

### MEANS TO SOLVE THE PROBLEMS

To achieve this object, a monitoring apparatus according to the present invention is a monitoring apparatus which has an imaging section that can partially pickup an image of a monitoring target object, and monitors a surface of the monitoring target object by using partial images of the monitoring target object in a plurality of imaging regions, the images being obtained by picking up images of a plurality of parts of the monitoring target object while relatively moving the imaging regions of the imaging section with respect to the monitoring target object, the apparatus comprising: an image connecting section, which compresses the plurality of partial images so that each compression ratio in a direction corresponding to the relative movement is larger than that in a direction vertical to the relative movement direction, and connects the partial images to be arranged in the relative movement direction to obtain a connected image by which the part of the monitoring target object can be continuously visible in the relative movement direction; and an image display section which displays the connected image made by the image connecting section.

In the above mentioned monitoring apparatus, it is preferable that the image display section displays the connected image in a state of being divided into a plurality of parts.

It is preferable that the above mentioned monitoring apparatus further has a rotation holding section which rotatably holds the monitoring target object, **characterized in that** the rotation holding section rotationally drives the monitoring target object around, as a rotation axis, a rotation symmetry axis of the monitoring target object which has an approximately disk shape so that a relative rotation direction of an outer edge portion of the monitoring target object with respect to the imaging region of the imaging section is a relative movement direction, the imaging section continuously picks up images of the outer edge portion or an area near the outer edge portion of the monitoring target object in a direction perpendicular to the rotation axis, and the image connecting section connects each of the plurality of partial images of the outer edge portion or the area near the outer edge portion of the monitoring target object, the images being obtained by the continuous pickup, in order to create a connected image by which the outer edge portion or the area near the outer edge portion of the monitoring target object can be continuously visible in the relative rotation direction.

It is preferable that the above mentioned monitoring apparatus further has: an operation section which performs an operation to select a desired region in the image displayed on the image display section; and a selective display control section which displays the partial image corresponding to the selected region on the image display section.

It is preferable that the above mentioned monitoring apparatus further has an abnormality information creating section which creates abnormality information that indicates a change in the connected image in the relative movement direction, and displays the abnormality information on the image display section in synchronization with the connected image.

It is preferable that the above mentioned monitoring apparatus further has: an operation section which executes an operation to select a desired region for the abnormality information which is displayed on the image display section; and a second selection display control section which displays the partial image corresponding to the selected region on the image display section.

A monitoring method according to the present invention is a monitoring method for monitoring a surface of a monitoring target object by using partial images of the monitoring target object in a plurality of imaging regions, the images being obtained by picking up, in use of an imaging section that can partially pickup the monitoring target object, images of a plurality of parts of the monitoring target object while relatively moving the imaging regions of the imaging section with respect to the monitoring target object, the method comprising: an image connecting processing, which compresses the plurality of partial images so that each compression ratio in a direction corresponding to a relative movement is larger than that in a direction vertical to the relative movement direction, and connects the partial images to be arranged in the relative movement direction to obtain a connected image by which the part of the monitoring target object can be continuously visible in the relative movement direction; and an image display processing which displays the connected image made in the image connecting processing.

In the above mentioned image display processing, it is preferable that the connected image is displayed in a state of being divided into a plurality of parts.

### ADVANTAGEOUS EFFECTS OF THE INVENTION

According to the present invention, defects can be easily recognized throughout a wide range.

### BRIEF DESCRIPTION OF THE DRAWINGS

Fig. 1 is a diagram depicting a general configuration of a monitoring apparatus according to the present invention;
Fig. 2 is a side view depicting an area near the outer edge portion of a wafer;
Fig. 3 is a control block diagram depicting an image processing section;
Fig. 4 is a flow chart depicting a monitoring method according to the present invention;
Fig. 5 is a diagram depicting steps of the image connecting processing;
Fig. 6 is a diagram depicting steps of the defect detecting processing;
Fig. 7 is a diagram depicting a display example of a connected image and a defect map; and
Fig. 8 is an enlarged view of the defect map.

### EXPLANATION OF NUMERALS AND CHARACTERS

- 1: monitoring apparatus
- 10: wafer (monitoring target object)
- 20: wafer supporting section (rotation holding section)
- 30: imaging section
- 40: image processing section
- 44: image connecting section
- 45: defect detecting section
- 50: control section (abnormality information creating section)
- 51: interface section (image display section)
- A: partial image
- B: connected image
- C: defect map (abnormality information)

### DESCRIPTION OF THE PREFERRED EMBODIMENTS

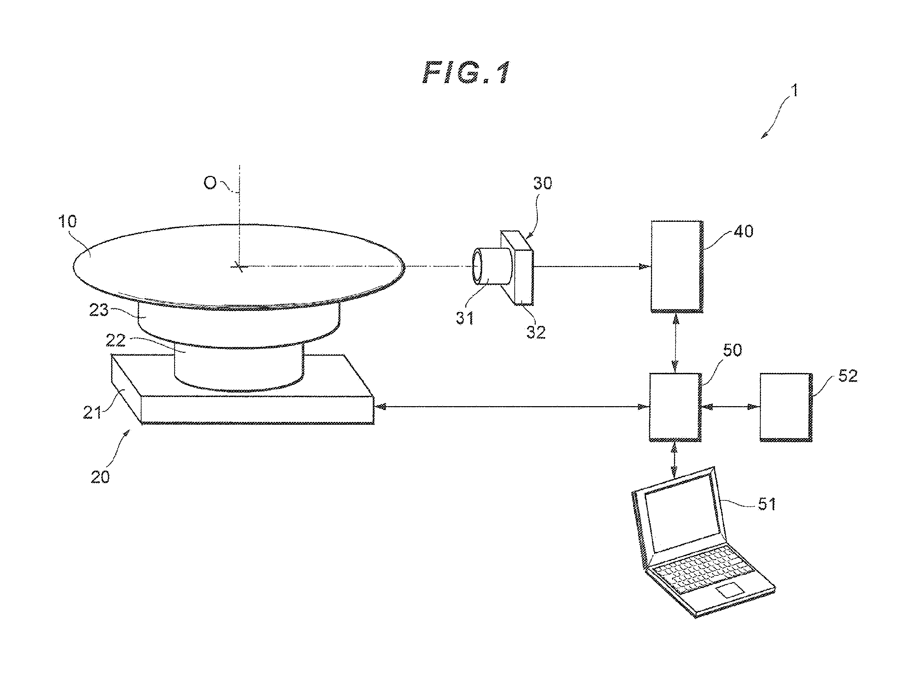

Preferred embodiments of the present invention will now be described. Fig. 1 shows an example of a monitoring apparatus according to the present invention, and the monitoring apparatus 1 is for a user to visually inspect for the presence of a defect (e.g. scratch, adhering foreign substance) on the edge and an area near the edge of a semiconductor wafer 10 (hereafter called wafer 10).

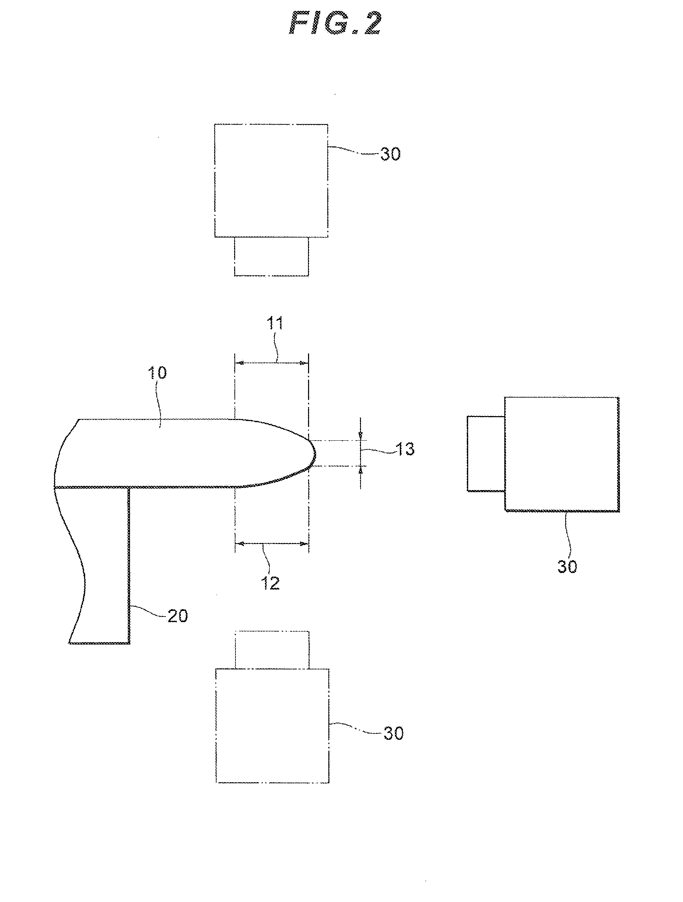

The wafer 10, which is a monitoring target object, has a thin disk shape, and a multilayer of thin films (not illustrated), such as an insulation film, an electrode wiring film and semiconductor film, are formed on the surface thereof, so as to generate a circuit pattern (not illustrated) corresponding to a plurality of semiconductor chips (chip regions) which are diced out from the wafer 10. As Fig. 2 shows, an upper bevel section 11 is formed into a ring form inside the outer edge portion on the surface (top face) of the wafer 10, and the circuit patterns are formed inside the top bevel section 11. Inside the outer edge portion on the rear face (bottom face) of the wafer 10, a bottom bevel section 12 is formed to be asymmetrical with the top bevel section 11 on the front face with respect to the wafer 10. The wafer end face connected to the top bevel section 11 and the bottom bevel section 12 is an apex section 13.

The monitoring apparatus 1 is comprised of a wafer supporting section 20 which supports and rotates the wafer 10, an imaging section 30 which picks up images of an outer edge portion and an area near the outer edge portion of the wafer 10, an image processing section 40 which performs a predetermined image processing on the image of the wafer 10 picked up by the imaging section 30, and a control section 50 which controls driving of the wafer supporting section 20 and the imaging section 30.

The wafer supporting section 20 has a base 21, a rotation axis 22 which extends vertically up from the base 21, and a wafer holder 23 which is installed roughly horizontally on the top edge of the rotation axis 22 so as to support the wafer 10 on the top face thereof. A vacuum suction mechanism (not illustrated) is installed inside the wafer holder 23, so that the wafer 10 on the wafer holder 23 is held by vacuum suction of the vacuum suction mechanism.

A rotation drive mechanism (not illustrated) which rotationally drives the rotation axis 22 is disposed inside the base 21, and by rotating the rotation axis 22 by the rotation drive mechanism 25, the wafer 10 held on the wafer holder 23 by suction is rotationally driven around the center of the wafer 10 (rotation symmetry axis 0) as the rotation axis, along with the wafer holder 23 installed on the rotation axis 22. The wafer holder 23 has an approximately disk shape with a diameter smaller than that of the wafer 10, so that an area near the outer edge portion of the wafer 10, including the top bevel section 11, bottom bevel section 12 and apex section 13, extends out of the wafer holder 23 in a state where the wafer 10 is held on the wafer holder 23 by suction.

The imaging section 30 is a so called "two-dimensional camera", which is mainly comprised of a lens barrel section 31, which is not illustrated, having an objective lens and an epi-illumination, and a camera main unit 32 having a built-in image sensor, which is not illustrated, so that the illumination light by the epi-illumination irradiates the wafer 10 via the objective lens, and the reflected light from the wafer 10 is guided to the image sensor via the objective lens, and the image of the wafer 10 is picked up by the image sensor.

The imaging section 30 is disposed so as to face the apex section 13 of the wafer 10 in order to partially pickup an image of the apex section 13 in a direction perpendicular to the rotation axis (rotation symmetry axis O) of the wafer 10. Since the outer edge portion, that is, the apex section 13, of the wafer 10 relatively rotates in the circumference direction of the wafer 10 with respect to the imaging region of the imaging section 30 if the wafer 10 supported by the wafer supporting section 20 is rotated, the imaging section 30 facing the apex section 13 can continuously pickup a plurality of images of the apex section 13 in the circumference direction (that is, the relative rotation direction), and can pickup the images of the apex section 13 all through the circumference of the wafer 10. The image data picked up by the imaging section 30 is output to the image processing section 40.

The control section 50 includes a control board for performing various controls, so that the operation of the wafer supporting section 20, imaging section 30 and image processing section 40 is controlled based on the control signals from the control section 50. An interface section 51 which has an operation section for performing operations of the image display section and the cursor on the image, and a storage section 52 for storing the image data, are electrically connected to the control section 50.

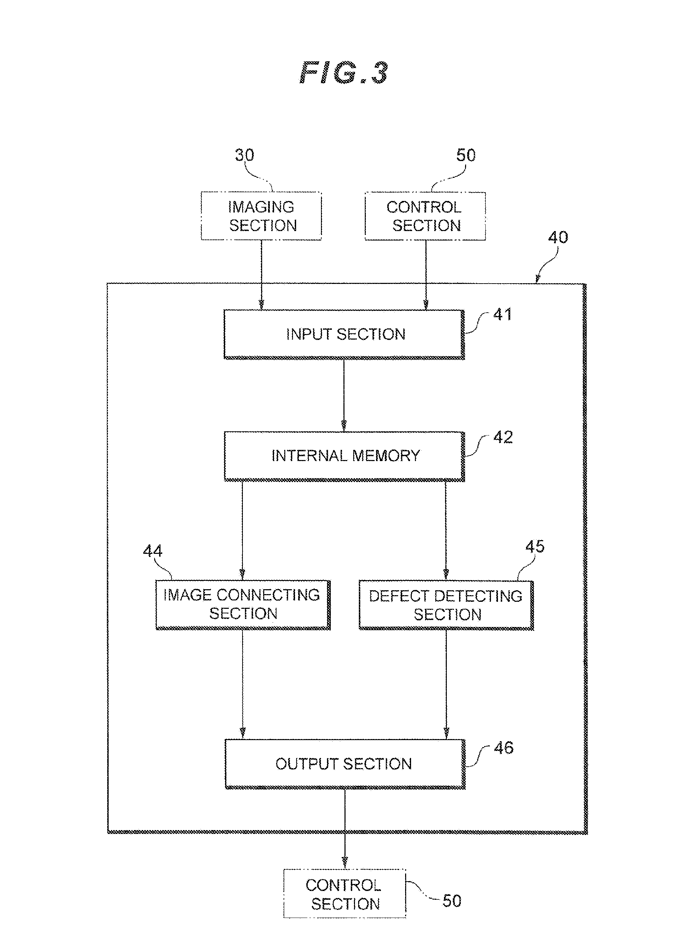

The image processing section 40 includes a circuit board, which is not illustrated, and has an input section 41, internal memory 42, defect detecting section 45, image connecting section 44 and output section 46, as shown in Fig. 3. Image data from the imaging section 30 is input to the input section 41, and various setting parameters which are input to the interface section 51 are input via the control section 50. The image data on the wafer 10 (apex section 13), which is input to the input section 41, is sent to the internal memory 42.

The defect detecting section 45 is electrically connected with the internal memory 42, and when the image data is input from the internal memory 42, a defect (abnormality) is detected based on this image data. For defect (abnormality) detection, the frequency is detected in two categories: a micro-defect (a defect confined to one image) and a regional defect (a defect that extending over a plurality of images) for each image data, and defect detection data is generated. The defect detection may be executed after the later mentioned image connecting processing.

The image connecting section 44 is electrically connected with the internal memory 42, and performs the later mentioned image connecting processing based on a plurality of image data stored in the internal memory 42, generates a connected image and outputs it to the output section 46. The image connecting section 44 may generate a defect detection map in which the defect detection data generated in the defect detecting section 45 is corresponded with a position in the connected image, and output this map to the output section 46.

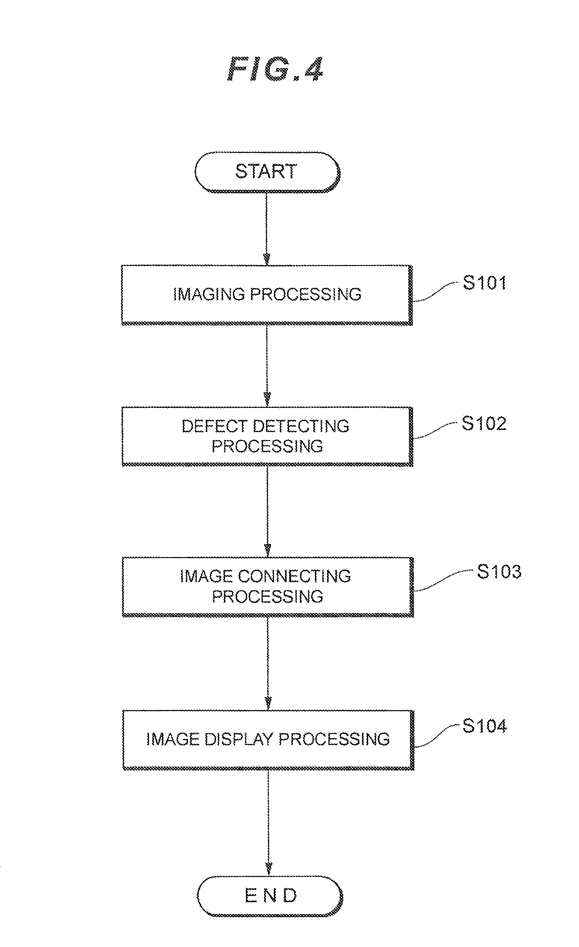

Now a monitoring method for a wafer 10 using the monitoring apparatus 1 having the above configuration will be described with reference to the flow chart in Fig. 4. First in step S101, the imaging processing to pickup an image of the apex section 13 of the wafer 10, which is a monitoring target object, is performed. In this imaging processing, the wafer supporting section 20, which received a control signal from the control section 50, rotates the wafer 10, and the imaging section 30 continuously picks up a plurality of images of the apex section 13 (in the circumference direction), which relatively rotates in the circumference direction of the wafer 10, so as to pickup the image of the apex section 13 all through the circumference of the wafer 10.

When the imaging section 30 continuously picks up the images of the apex section 13, a plurality of partial images of the apex section 13 are obtained for each imaging region of the imaging section 30 which is relatively moved by the rotation of the wafer 10, and the image data of these partial images is output to the image processing section 40. The image data of the partial images which is output from the imaging section 30 is input to the input section 41 of the image processing section 40, and is sent to the internal memory 42 respectively.

When the imaging section 30 picks up the partial images of the apex section 13 all through the circumference of the wafer 10, the defect (abnormality) detection processing is performed in the next step S102. In the defect (abnormality) detection processing, the defect detecting section 45 detects the frequency in two categories: a micro-defect (a defect or abnormality confined to one image) and a regional defect (a defect or abnormality extending over a plurality of images) for each image data, and outputs the frequencies, in association with the image data, to the output section 46. The defect (abnormality) detection data which is output to the output section 46 is sent to the storage section 52 via the control section 50, and is stored in the storage section 52.

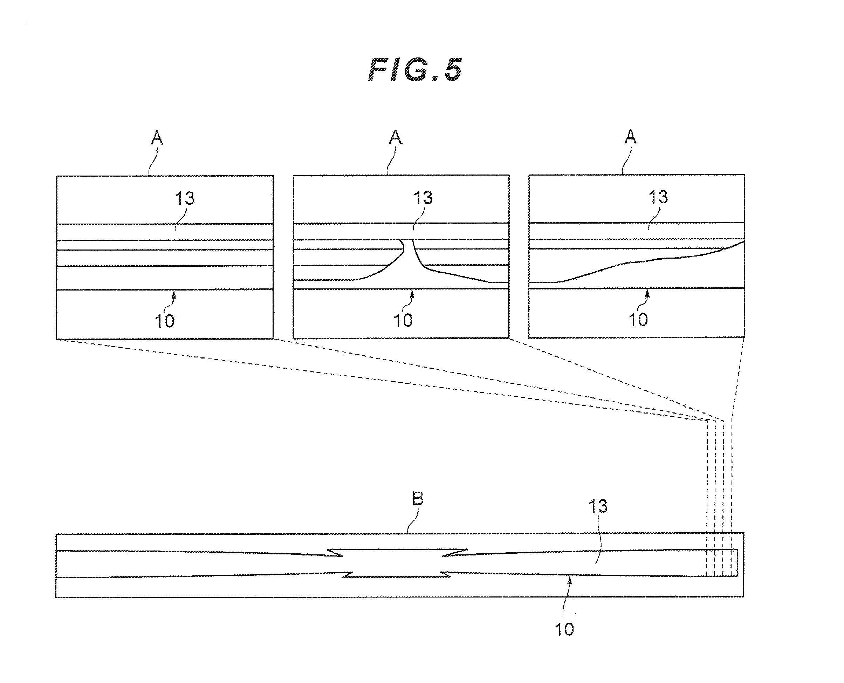

In the next step S103, the image connecting processing is performed. In the image connecting processing, as shown in Fig. 5 for example, the image connecting section 44 connects the plurality of partial images A, A, ... of the apex section 13 stored in the internal memory 42 so as to be arranged in the circumference direction (that is, relative rotation direction of the apex section 13) of the wafer 10, then compresses the images so that a compression ratio of the connected image in a direction corresponding to the relative rotation direction of the apex section 13 is larger than that in the direction vertical to the relative rotation direction (e.g. an average of the brightness information in a pixel range of 400 pixels in a direction corresponding to the relative rotation direction by 25 pixels in the direction vertical to such direction is determined, for R (red), G (green) and B (blue) respectively, and using the determined average as the brightness information for one pixel in the compressed image, the image is compressed so that the compression ratio in the direction corresponding to the relative rotation direction becomes 1/400 and the compression ratio in the direction vertical to such direction becomes 1/25), so as to obtain a connected image B by which the apex section 13 of the wafer 10 can be continuously visible in the circumference direction. The image connecting section 44 then outputs the data on the connected image B, in association with the position information before compression, to the output section 46. The data on the connected image, which is output to the output section 46 (the connected image B and the position information thereof before compression) is sent to the storage section 52 via the control section 50, and is stored in the storage section 52. In the case of using a line sensor, such as a one-dimensional CCD, an image similar to the connected image can be obtained by scanning at a predetermined angle in the image connecting processing.

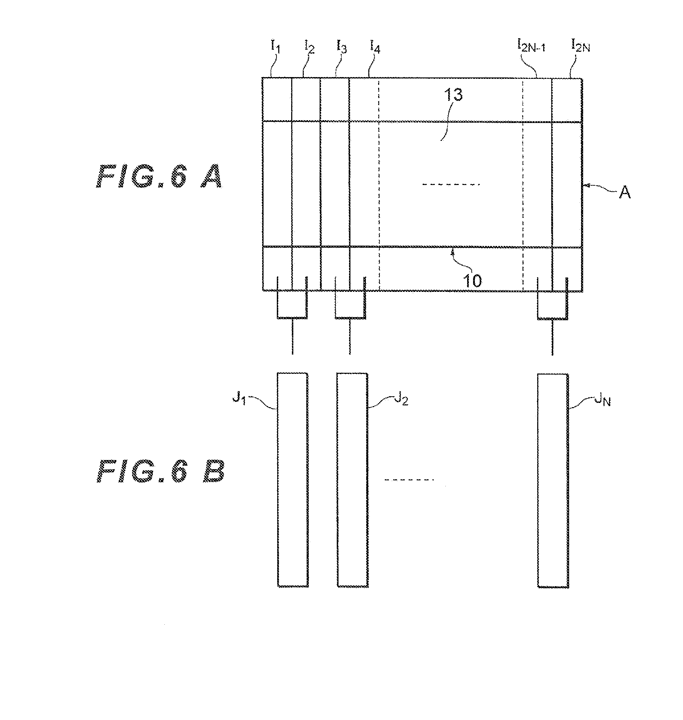

An example of the detection of a defect (abnormality) of the wafer 10 is as follows. First as Fig. 6A shows, a partial image A is divided into 2 × N (N is a natural number) number of rectangular divided images I₁ to I_{2N}, which are arranged in the circumference direction of the wafer 10. Then as Fig. 6B shows, N number of (rectangular) differential processing images J₁, J₂, ..., J_{N} are created, which are obtained by determining a difference of image signals between the odd number of divided images I₁, I₃, ... , I_{2N-1} counted from the left side of the partial image A, and the even number of divided images I₂, I₄, ..., I_{2N}, which are shifted to the right from these odd number of images in the circumference direction of the wafer 10 respectively (brightness information of each pixel of each divided image, to be more specific). It is checked whether a signal exists for each of these differential processing images, and a portion where a signal exists is regarded as a defect (abnormality) candidate. Then a brightness difference between the portion of the defect (abnormality) candidate and the peripheral portion thereof is determined in the divided image corresponding to the defect (abnormality) candidate, and in the case when the brightness difference exceeds a predetermined threshold, the portion is detected as a regional defect (abnormality) if such a portion extends to both ends or to one end of the divided image, or as a micro-defect (abnormality) if such a portion is not extended to both ends or to one end. The detected micro-defect and regional defect, in association with the divided image, are output to the output section 46. The defect (abnormality) data (frequencies of micro-defect and regional defect) which was output to the output section 46 is sent to the storage section 52 via the control section 50, and is stored in the storage section 52. The portion detected as a defect (abnormality) does not always become a defect in the semiconductor manufacturing process, but in some cases, whether it is a defect or a minor abnormality may be judged by detecting and monitoring such a defect (abnormality) portion.

Another available simple method for detecting a defect (abnormality) of a wafer 10 is as follows. In the case of a regional defect (abnormality), such as a stain due to water drops or a defect at the edge of a coating film, an uneven brightness change appears, compared with normal portions, so if the average brightness of all pixels is determined for N number of (rectangular) differential processing images J₁, J₂, ..., J_{N} which are obtained based on the difference of brightness information for each pixel of each divided image mentioned above, then the tendency of the regional defect can be known. In the case of a localized micro-defect (abnormality), such as a scratch, a prominent brightness change appears, compared with normal portions, so if the maximum brightness in all pixels is determined for N number of (rectangular) differential processing images J₁, J₂, ..., J_{N} which are obtained based on the difference of brightness information for each pixel of each divided image mentioned above, then the tendency of the micro-defect can be known.

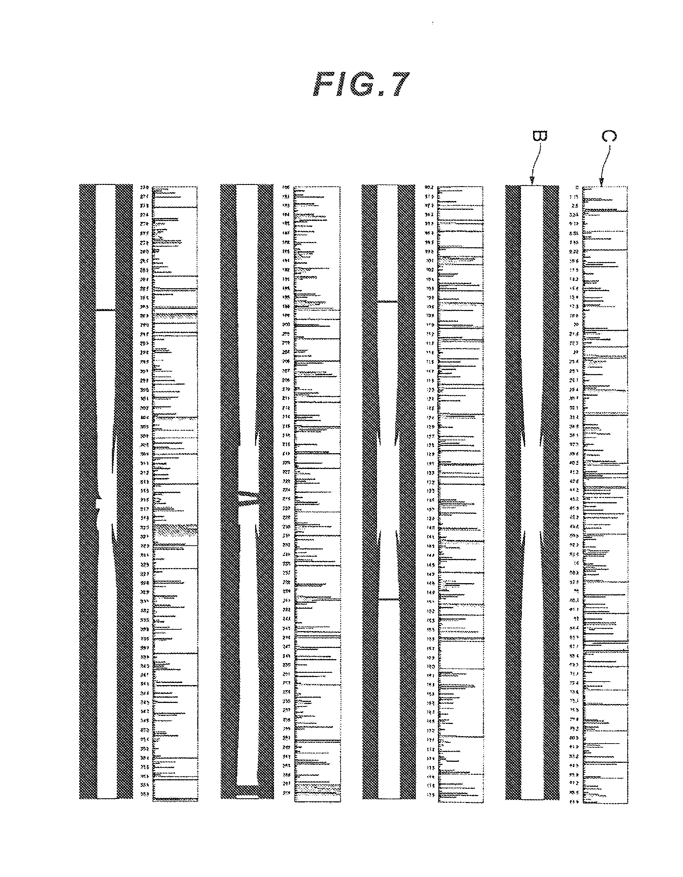

In step S104, the control section 50 creates a defect map C (see Fig. 7), which is a defect data, by corresponding the connected image created by the image connecting section 44 and the position information, which are stored in the storage section 52, and performs image display processing for displaying the connected image B (see Fig. 7) and defect map C on the image display section of the interface section 51.

Fig. 7 shows an example of a display image which is displayed on the image display section of the interface section 51. In this display image, the connected image B and the defect map C are displayed together at the top and bottom. The connected image B and the defect map C are displayed in four rows (a plurality of rows) for each 90° rotation angle in the wafer 10. Whereby the image region can be effectively used. The rotation angle is not limited to 90°, but may be 120°, in which case the connected image B and the defect map C are displayed in three rows. The rotation angle position on the wafer 10 in the connected image B is displayed between the connected image B and the defect map C, although this is not illustrated.

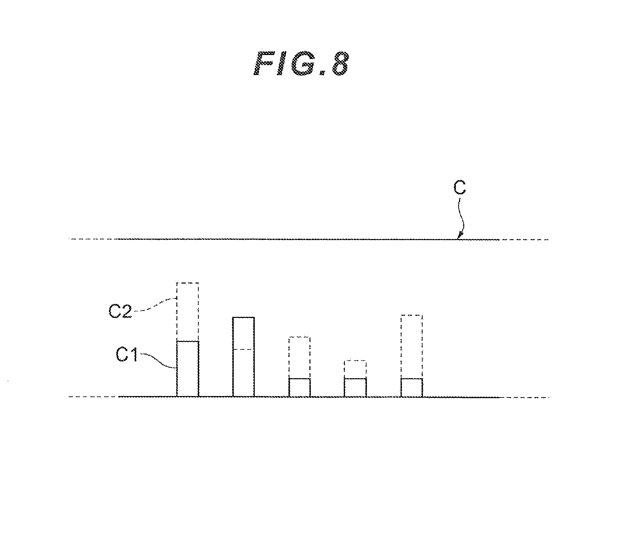

As mentioned above, the defect map C shows the change of brightness in the connected image B in the circumference direction of the wafer 10, but the image display section displays it so as to synchronize with the connected image B. Thereby a position where the possibility of a defect is high on the wafer 10 (apex section 13) can be easily recognized. In the defect map C shown in Fig. 7, a defect map C1, corresponding to a regional defect and a defect map C2 corresponding to a micro-defect, are simultaneously displayed, as shown in the enlarged view in Fig. 8. The defect map C1 is suitable for detecting a defect of which appearance is similar to that of the edge of the coating film of the wafer 10, and the defect map C2 is suitable for detecting a local defect, such as a scratch, so these defect maps can be selectively used depending on the type of defects to be detected. The length of a bar in the defective map C1 corresponding to the regional defect indicates the frequency of the regional defects in the corresponding region (divided image), and the length of a bar in the defect map C2 corresponding to the micro-defect indicates the frequency of the micro-defects in the corresponding region (divided image). The length of a bar in the defect map C1 corresponding to the regional defect may represent an average brightness in the differential processing image in the corresponding region (divided image), and the length of a bar in the defect map C2 corresponding to the micro-defect may indicate a maximum brightness in the differential processing image in the corresponding region (divided image). The defect map C1 corresponding to the regional defect and the defect map C2 corresponding to the micro-defect may be separately displayed side by side, without being superimposed as shown in Fig. 8.

In this display image, if the operation section of the interface section 51 is operated so as to move the cursor, which is not illustrated, to a certain region of the connected image B, and select (click on) it, then a partial image (before image connecting processing), constituting the selected region, is displayed as an uncompressed or slightly compressed image by the image control of the control section 50. Thereby a detailed image (partial image) that includes a defect can be monitored when necessary.

It may be designed such that if the operation section of the interface section 51 is operated so as to move the cursor, which is not illustrated, to a certain region of the defect map C and select (click on) it, a partial image corresponding to the selected region is displayed as an enlarged view by the image control of the control section 50. In this way as well, a detailed image that includes a defect can be monitored when necessary.

By monitoring the connected image B, defect map C, or a partial image when required, which are displayed on the image display section of the interface section 51, as mentioned above, the presence of a defect (e.g. scratch, adhering foreign substance) in the apex section 13 of the wafer 10 can be inspected. The defect of the wafer 10 may be automatically detected by detecting the area where the brightness change is major, using the defect map C.

As a result, according to the monitoring apparatus 1 and monitoring method according to the present embodiment, a connected image B, in which a plurality of partial images are connected, is displayed on the image display section of the interface section 51, in a state where the image is compressed more in the relative rotation direction of the wafer 10, so the apex section 13 of the wafer 10 can be continuously visible in a wide range in the circumference direction, and defects in a wide range on the wafer 10 (apex section 13) can be easily recognized. Also a macro-defect on the wafer 10, such as defect which could cause an ablation of thin film or a defect which could damage the wafer 10, can be recognized, and the position of a defect on the wafer 10 can be easily known.

As mentioned above, an image of the entire apex section 13 of the wafer 10 can be efficiently picked up by the wafer supporting section 20 rotatably driving the wafer 10 and the imaging section 30 continuously picking up the images of the apex section 13 of the wafer 10 in the circumference direction, from the direction perpendicular to the rotation axis of the wafer 10.

In the above embodiment, the image of the apex section 13 is picked up throughout the circumference of the wafer 10, but the present invention is not limited to this, but images may be picked up only in a desired angle position range of the apex section 13 by the operation control of the control section 50. Thereby the presence of a defect can be inspected only for the desired angle position range in the apex section 13.

In the above embodiment, the connected image B is displayed on the image display section of the interface section 51 in a state of being divided into a plurality of rows, but the present invention is not limited to this, and the entire connected image B may be displayed as is (without dividing it into a plurality of rows).

In the above embodiment, the imaging section 30 picks up the image of the apex section 13 of the wafer 10, but the present invention is not limited to this, but the image of the top bevel section 11 of the wafer 10 may be picked up, as the dashed line in Fig. 2 shows, for example, or the bottom bevel section 12 of the wafer 10 may be picked up, as the two-dot chain line of Fig. 2 shows. In this way, the presence of a defect can be inspected not only in the apex section 13 of the wafer 10, but also in the top bevel section 11 and the bottom bevel section 12. The inspection target is not limited to the outer edge portion or an area near the outer edge portion of the wafer 10, but may be a glass substrate, for example, and the present embodiment is particularly effective if it is applied to a monitoring target object of which surface state is approximately uniform.

In the above embodiment, an amplification type solid-state image sensor, such as a CCD and CMOS, can be used for the image sensor, and the image sensor may be either a two-dimensional sensor or one-dimensional sensor.

In the above embodiment, the image connecting section 44 connects the plurality of partial images so as to be arranged in the circumference direction of the wafer 10 respectively, and then compresses the connected image to generate the connected image B, but the present invention is not limited to this, and it is also possible that each partial image is compressed first, and then these compressed images are connected respectively.

## Claims

1. A monitoring apparatus which has an imaging section that can partially pickup an image of a monitoring target object, and monitors a surface of the monitoring target object by using partial images of the monitoring target object in a plurality of imaging regions, the images being obtained by picking up images of a plurality of parts of the monitoring target object while relatively moving the imaging regions of the imaging section with respect to the monitoring target object,
the apparatus comprising:
an image connecting section, which compresses the plurality of partial images so that each compression ratio in a direction corresponding to the relative movement is larger than that in a direction vertical to the relative movement direction, and connects the partial images to be arranged in the relative movement direction to obtain a connected image by which the part of the monitoring target object can be continuously visible in the relative movement direction; and
an image display section which displays the connected image made by the image connecting section.

2. The monitoring apparatus according to Claim 1, **characterized in that** the image display section displays the connected image in a state of being divided into a plurality of parts.

3. The monitoring apparatus according to Claim 1 or Claim 2, further comprising a rotation holding section which rotatably holds the monitoring target object,
the apparatus being **characterized in that**
the rotation holding section rotationally drives the monitoring target object around, as the rotation axis, a rotation symmetry axis of the monitoring target object, which has an approximately disk shape so that a relative rotation direction of an outer edge portion of the monitoring target object with respect to the imaging region of the imaging section is a relative movement direction,
the imaging section continuously picks up images of the outer edge portion or an area near the outer edge portion of the monitoring target object in a direction perpendicular to the rotation axis, and
the image connecting section connects each of the plurality of partial images of the outer edge portion or the area near the outer edge portion of the monitoring target object, the images being obtained by the continuous pickup, in order to create a connected image by which the outer edge portion or the area near the outer edge portion of the monitoring target object can be continuously visible in the relative rotation direction.

4. The monitoring apparatus according to any one of claims 1 to Claim 3, further comprising:
an operation section which performs an operation to select a desired region in the image displayed on the image display section; and
a selective display control section which displays the partial image corresponding to the selected region on the image display section.

5. The monitoring apparatus according to any one of Claims 1 to Claim 4, further comprising an abnormality information creating section which creates abnormality information that indicates a change in the connected image in the relative movement direction, and displays the abnormality information on the image display section in synchronization with the connected image.

6. The monitoring apparatus according to Claim 5, further comprising:
an operation section which executes an operation to select a desired region for the abnormality information which is displayed on the image display section; and
a second selection display control section which displays the partial image corresponding to the selected region on the image display section.

7. A monitoring method for monitoring a surface of a monitoring target object by using partial images of the monitoring target object in a plurality of imaging regions, the images being obtained by picking up, in use of an imaging section that can partially pickup the monitoring target object, images of a plurality of parts of the monitoring target object while relatively moving the imaging regions of the imaging section with respect to the monitoring target object,
the method comprising:
an image connecting processing, which compresses the plurality of partial images so that each compression ratio in a direction corresponding to a relative movement is larger than that in a direction vertical to the relative movement direction, and connects the partial images to be arranged in the relative movement direction to obtain a connected image by which the part of the monitoring target object can be continuously visible in the relative movement direction; and
an image display processing which displays the connected image made in the image connecting processing.

8. The monitoring method according to Claim 7, **characterized in that** in the image display processing the connected image is displayed in a state of being divided into a plurality of parts.
